# EUROPEAN PATENT SPECIFICATION

(11) **EP 1 202 464 B1**
(45) Date of publication and mention of the grant of the patent: **23.03.2005**
(21) Application number: 01402716.3
(22) Date of filing: 19.10.2001
(51) Int. Cl.: H04B 1/20, H04L 12/46

(54) **Method and device for managing a communication network**
Verfahren und Vorrichtung zum verwalten eines Kommunikationsnetzes
Procédé et dispositif pour gerer un reseau de communication

(30) Priority: 27.10.2000 FR 0013879
(43) Date of publication of application: 02.05.2002
(60) Divisional application: 05075013.2
(73) Proprietor: CANON KABUSHIKI KAISHA, Tokyo (JP)
(72) Inventor: Frouin, Laurent, 35700 Rennes (FR)
(74) Representative: Santarelli

(56) References cited:
- EP-A- 0 696 109
- EP-A- 0 837 579
- EP-A- 0 920 139
- WO-A-00/59230
- US-A- 5 787 259

## Description

The present invention concerns the transmission of data in a "packet switching" communication network, in which the data are conveyed in the form of packets of fixed or variable length between network hosts functioning as data sources and receivers. It concerns more particularly what may be called the "management" of such a network, that is to say putting, according to the requirements of the network users, any chosen host in communication with any other chosen host.

The communication networks considered here are of the type comprising on the one hand hosts and on the other hand a sub-network consisting of communication nodes interconnected by means of bidirectional links, each host being connected to a certain node by means of an appropriate interface. A host may for example be connected to the corresponding interface by means of a serial communication bus.

Modern communication networks often have the task of transmitting data of different natures such as video, sound, photographs, text files, and so on. The transmission of these data is subject to variable requirements according to the type of data in question. This is because video, for example, requires continuous data transfer at a particular rate; this is even more true for sound: it is then said that "isochronous" data are being dealt with. On the other hand, it is not necessary to transmit the data in a text file continuously or even in a regular fashion: it is then said that "asynchronous" data are being dealt with; other examples of asynchronous data would be commands for stopping or starting various items of equipment, and also the data supplying printers.

The devices capable of manipulating all these data, commonly referred to today as audio-visual devices, must therefore be able to transmit asynchronous data as well as isochronous data, and in addition be able to transmit isochronous data timed at variable rates.

Such packet switching networks are described notably in the French patent application FR-0001553 in the name of CANON. A detailed description of the data transfer mechanisms, for example of the audio-visual type, can be found therein.

EP0837579 discloses a network of audio/visual devices comprising a sub-network consisting of interconnected nodes (control terminals). A complete list of hosts in the network and their capabilities is maintained in every node in order to actuate any host in the network from any node. The list is created by messages exchanged between the nodes.

Under these circumstances, a first aim of the invention is to propose a method and device for managing such a communication network, that is to say for remotely triggering the sending of data packets by a chosen host to another chosen host in accordance with the requirements of the network users. It is a case, for example, for the user of a domestic audio-visual network situated close to a television receiver, of starting up the playing of a video cassette housed in a video tape recorder situated in another room in the house, and therefore too far away for the signal transmitted by the remote control of the video tape recorder to be able to reach it, said audio-visual network being able to include several video tape recorders.

Thus the invention concerns, according to a first aspect, a method of managing a communication network comprising on the one hand a sub-network consisting of communication nodes interconnected by links conveying digital signals, and on the other hand several hosts able to exchange data by means of this sub-network; according to this method, in order to actuate, from any first node in the network, any host in the network by means of operating commands transmitted by an appropriate interface attached to a second node in the network to which said host is connected,
- a search signal containing information representing the technical features of the host to be actuated is transmitted from said first node in the direction of the nodes in the network including the first node,
- a candidate host is identified, which may be the host to be actuated on the basis of compatibility between the technical features of this candidate host and the technical features indicated in the search signal,
- this host candidate is started up by means of a control interface attached to the node to which said candidate host is connected, and
- if this candidate host proves not to be the host to be actuated, a search signal is transmitted once again in order to continue the search, whereas, if this host does indeed prove to be the host to be actuated, operating commands are sent to it by means of said control interface, which also interrupts the search.

By virtue of the invention, it is then possible, according to the requirements of a user of the network, to put in communication two hosts in the network by implementing, for at least one of said two hosts, a method as described succinctly above, which makes it possible to manage the network effectively.

The "configuration" of a data processing apparatus means the technical features of this apparatus, which make it possible on the one hand to assist its location on the network and on the other hand to control its functionalities by means of a remote control signal adapted to this apparatus. In addition to the code number allocated to this apparatus by the manufacturer, it will be a case, for example, in the case of a camera, of the parameters making it possible to actuate the zoom.

Where the apparatus to be controlled is an apparatus intended to process digital data in accordance with IEEE-1394, the method of obtaining its configuration, by connecting up to it, is specified by this standard (reference should be made in particular in this regard to the standards defined by the IEEE-1394 Trade Association).

On the other hand, for an apparatus intended to process analogue data, no equivalent has been proposed up to now. There is therefore no standardised format for defining its configuration, and even less a method for reading a configuration by connecting up to this apparatus.

It can therefore be seen that, if it wished to include analogue equipment in a network according to the invention, it is necessary to find the means of obtaining the features which will serve to aid its location on the network, and to control the functionalities of this equipment.

Thus, according to a second of its aspects, the invention concerns a method of determining technical features in a communication network comprising on the one hand a sub-network consisting of communication nodes interconnected by links conveying digital signals, and on the other hand several hosts able to exchange data by means of this sub-network, at least one host amongst said hosts being able to exchange analogue signals by means of a data interface and being able to be controlled by means of a control interface. said method being remarkable in that certain technical features useful for being able to control this at least one host are obtained by analysing the technical features of said data interface.

By virtue of the invention, according to its second aspect, the configuration of each host exchanging analogue signals for the processing of data is thus derived from the properties of the data interface between this host and the node to which it is connected. It is then possible to treat the configurations of all the hosts in the communication network on an equal footing.

The invention also concerns various devices.

It thus concerns, firstly, a communication node intended to form part of a communication network comprising on the one hand a sub-network consisting of communication nodes interconnected by links conveying digital signals, and on the other hand several hosts able to exchange data by means of this sub-network, said node being remarkable in that it comprises
- at least one data interface for the possible connection of a host able to exchange analogue signals,
- at least one control interface able to transmit operating commands to such a host, and
- a unit supplying said control interface from signals representing these operating commands and received by said unit from other nodes.

The invention also concerns, secondly, a communication node intended to form part of a communication network comprising on the one hand a sub-network consisting of communication nodes interconnected by links conveying digital signals, and on the other hand several hosts able to exchange data by means of this sub-network, said node being remarkable in that it has at least one receiver able to receive operating commands intended for any host in the network, said receiver supplying a unit able to produce signals representing these operating commands and being able to be transmitted to other nodes.

The invention also relates to:
- a communication network, comprising at least one communication node as succinctly described above,
- a data processing apparatus having a communication node as succinctly described above,
- a data storage means which can be read by a computer or microprocessor storing instructions of a computer program, making it possible to implement one of the methods succinctly disclosed above,
- a data storage means which is removable, partially or totally, and which can be read by a computer and/or a microprocessor storing instructions of a computer program, making it possible to implement one of the methods succinctly disclosed above, and
- a computer program, containing instructions such that, when said program controls a programmable data processing device, said instructions mean that said data processing device implements one of the methods succinctly disclosed above.

The advantages offered by these communication nodes, communication networks, data processing apparatus, data storage means and computer programs are essentially the same as those offered by the methods according to the invention.

Other aspects and advantages of the invention will emerge from a reading of the following detailed description of particular embodiments, given by way of non-limitative examples. The description refers to the drawings which accompany it, in which:
- Figure 1 depicts schematically an audio-visual system according to the invention,
- Figure 2 depicts a connection device according to the invention,
- Figure 3 is a flow diagram representing the main successive steps of the loading, into the memory of the device of Figure 2, of the configuration of the analogue control hosts to which this device is connected,
- Figure 4 is a flow diagram representing the main successive steps executed by the device of Figure 2, to put in relationship the source host and the destination host chosen by the user, according to a certain embodiment of the invention,
- Figure 5 is a flow diagram representing in detail certain steps included in step 404 of Figure 4, the function of these steps being to collect the configurations of all the hosts in the audio-visual system,
- Figure 6 is a flow diagram representing in detail certain steps included in step 443 of Figure 5, the function of these steps being to transmit, according to a first embodiment, in a grouped fashion, the configurations of all the hosts connected to a connection device, to another connection device which has requested this,
- Figure 7 is a flow diagram representing in detail certain steps included in step 443 of Figure 5, the function of these steps being to transmit, according to a second embodiment, one after the other, the configurations of all the hosts connected to a connection device, to another connection device which has requested this,
- Figure 8 depicts the format of the so-called "management" data packets,
- Figure 9 depicts the format of the audio-visual data packets,
- Figure 10 depicts the format of the data packets used in the connection protocol between the switching nodes of the audio-visual system,
- Figure 11 depicts an example of a method of arranging, in a device according to the invention, memory areas intended for the configuration data for the hosts to which it is connected,
- Figure 12 depicts an example of a method of classifying the configuration data in a packet according to Figure 8, and
- Figure 13 depicts an example of organisation of data forming a subset of the data of Figure 12, this subset corresponding to a particular configuration characteristic presented by one or more of the hosts connected to the device sending said packet.

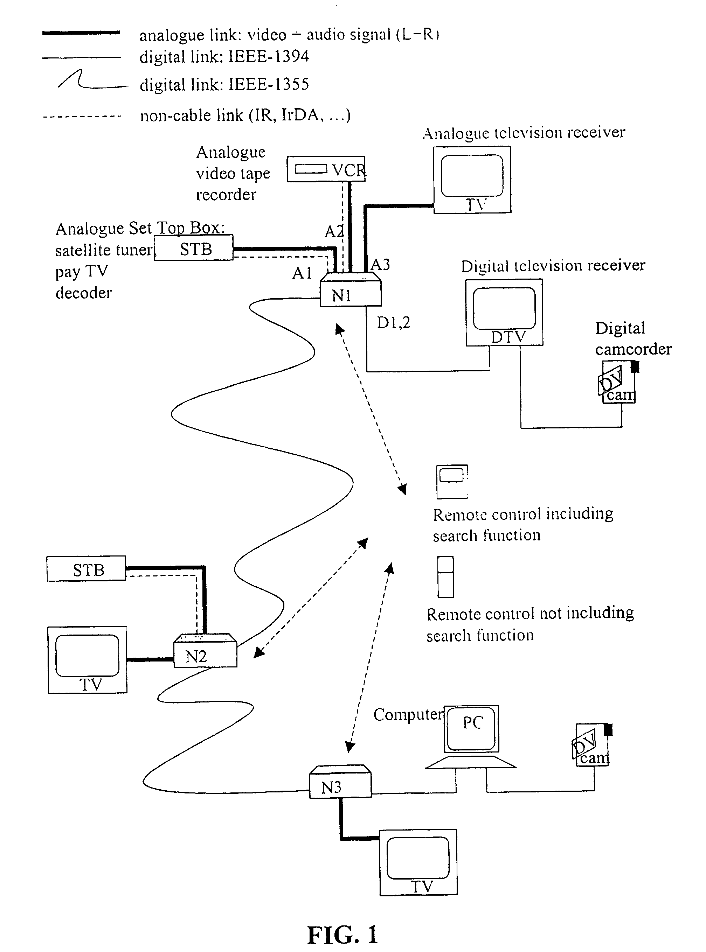

**Figure 1** depicts an audio-visual system, which is presented here solely by way of example in order to illustrate the characteristics of the communication networks according to the invention.

The communication network depicted connects together different hosts consisting here of data processing apparatus such as, for example, printers, servers, computers, scanners, decoders, satellite tuners, analogue or digital television receivers, video tape recorders, loudspeakers, digital photographic apparatus, analogue or digital camcorders, high-definition screens, and so on.

The hosts process digital data functioning preferably according to IEEE-1394. This standard concerns serial communication buses having high performance, and conveying data in packets at speeds of between 100 and 200 Mbps, or even around 400 Mbps (1 Mbps = 10⁶ bits per second). It is often convenient to connect several hosts to the same bus. Advantageously, such a bus can convey not only the data, for example audio-visual data, processed by a host which is connected to it, but also the commands serving to make this host operate.

In addition, the network according to the invention comprises remote commands for controlling the functioning (start up, stoppage etc) of certain hosts in the network. The signals emitted by a remote control can be conveyed by a wire or, as depicted in Figure 1, by a non-cabled link (for example in the form of infrared radiation), and these signals can be digital or analogue signals, independently of the fact that the data (for example audio-visual) processed by said apparatus are themselves of a digital or analogue type.

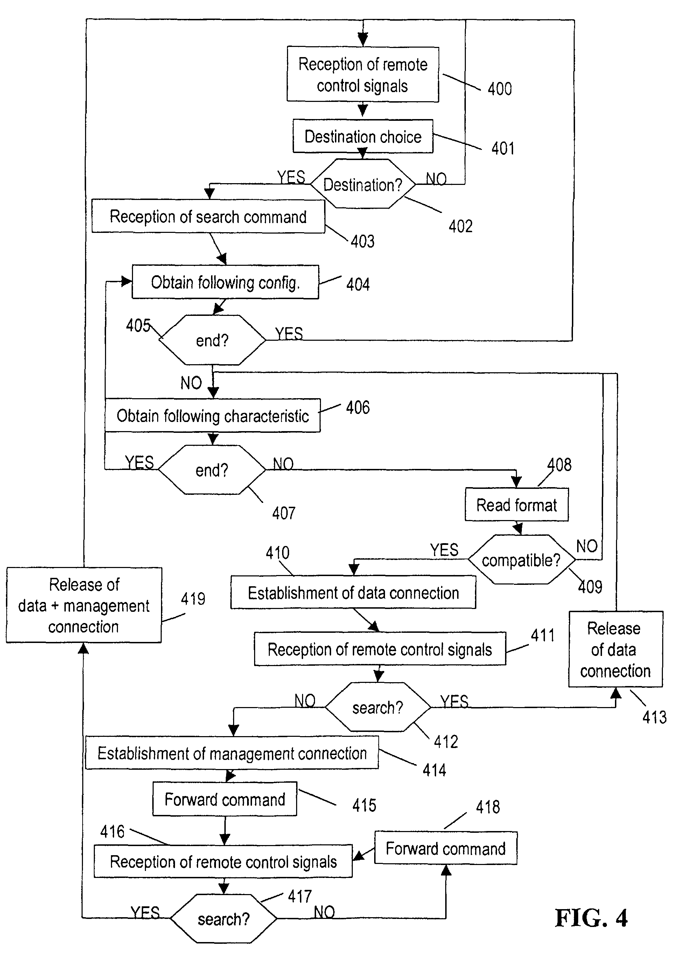

The usefulness of the "search function" mentioned in Figure 1 will be explained in detail below, notably with reference to Figure 4.

The communication network in question also includes a packet switching sub-network functioning in "virtual circuit" mode, which comprises communication nodes connected by bidirectional links (transmission lines). Thus the data transmitted by a first host can reach a second host by passing through said sub-network.

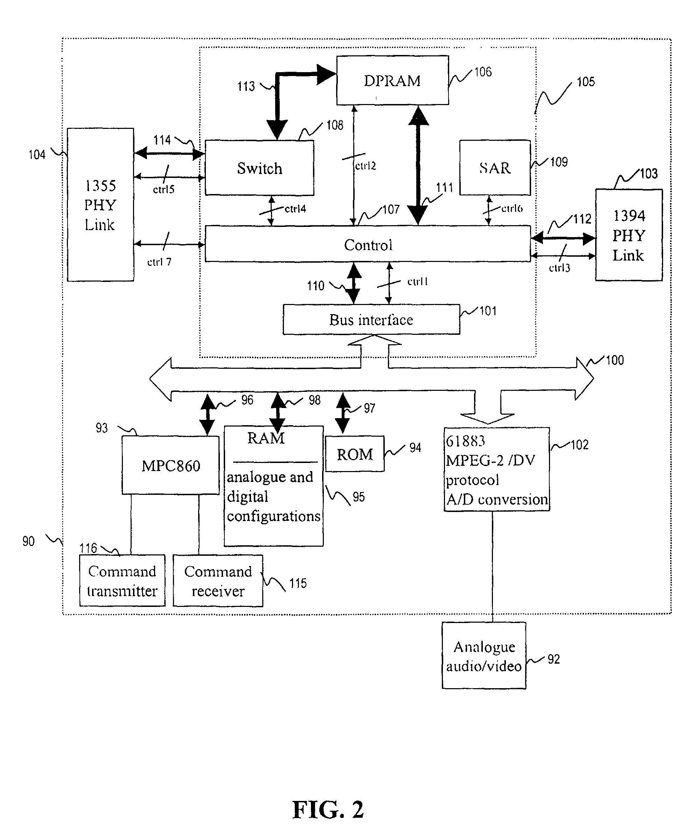

For reasons of simplicity, the communication nodes to which no host is connected have not been depicted in Figure 1; as for the other nodes, only some of them have been depicted, consisting of a connection device N1, N2 or N3, containing interfaces to which hosts are connected, thus omitting notably the part of the node containing a packet switching device within the sub-network. This is because the switching means have been described in earlier applications in the name of CANON. As for the structure of the device N1, N2 or N3, this will be described in detail below, notably with reference to Figure 2, where this connection device bears the reference number 90. Thus, in order to simplify the description, all the characteristics of the communication nodes which may prove useful for understanding the invention have been combined in this connection device 90, but it will be understood that these characteristics can be distributed otherwise within each node when the invention is concretely implemented.

The sub-network in question complies with IEEE-1355. This standard allows the transmission of packets of arbitrary size containing asynchronous data or isochronous data, and in addition imposes no constraint on the transmission rate of the isochronous data. In addition, this standard includes a reliable protocol implementing a "source routing" and a flow control at the level of the links.

The routing of the packets concerns the way in which the data transmitted by a source node find their destination or destinations on the network. When a message is conveyed over the links in the network, it is normally distributed over several data packets. Within each packet, the message data are framed by control instructions forming the appendix of the packet and by identification data forming the header of the packet (or vice versa).

More precisely, the appendix of the packet normally contains a mark identifying the end of packet, except if it is a case of the last packet in a message, in which case said appendix contains a mark identifying the end of the message.

As for the packet header, this indicates notably the destination of said packet and the path which has to be taken by it through the network in order to reach its destination. This is why "source routing" is spoken of. Each node in the network "knows" all these paths, which are determined from the topology of the network, and updated after each modification of this topology. In order to understand the way in which this set of paths is, automatically, formed and then broadcast to all the nodes in the network, reference can be made to the application FR-2778295 in the name of CANON.

Thus, when a user installs a data packet switching sub-network serving as an intermediary between various data processing apparatus, he fixes the topology of the communication network whilst avoiding the drawbacks related to the choice of this topology, and therefore avoiding having to study the audio-visual requirements, the performances of the different data processing apparatus, their location, and so on. In addition, in a switched network, the propagation times being less critical than on a bus, it is possible to increase the length of the cables independently of the propagation time, which advantageously makes it possible to move the communication buses away from each other. It is thus possible to connect the audio-visual apparatus installed in various rooms in a house.

**Figure 2** depicts a schematic view of a connection device 90 according to the invention intended to form part of a data packet switching node within an audio-visual system.

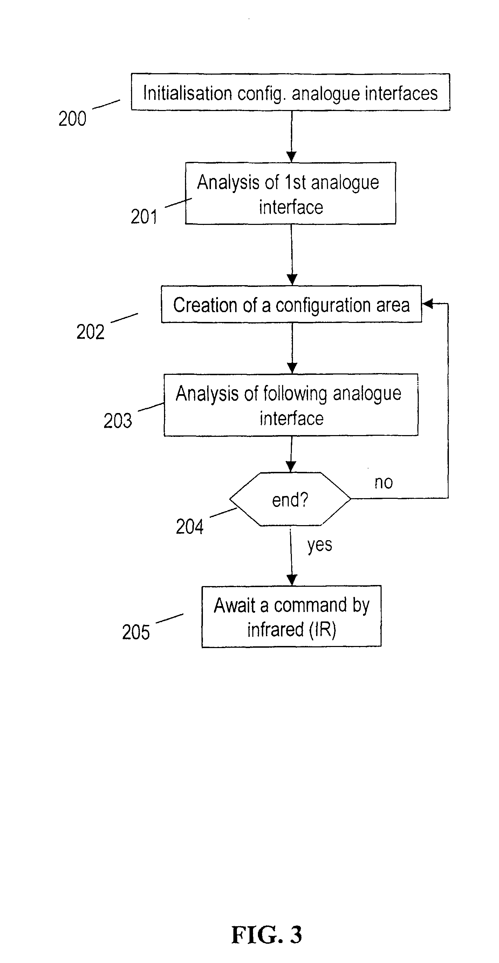

The device 90 has a permanent memory means 94 of the ROM type which contains the software architecture of the device and a temporary memory means 95 of the RAM type. On initialisation, the configurations of the hosts connected to this device 90 are placed in this RAM 95, as explained in detail below with reference to Figure 3.

It is, for example, possible to connect to this device 90 a host 92 consisting of an analogue audio-visual data processing apparatus, such as a television receiver, a video tape recorder or a satellite tuner. These analogue data are converted into digital data (or vice versa), in a conventional manner, by a converter incorporated into the interface 102. The latter may also comprise audio-visual data processing capabilities such as the compression of images in accordance with the MPEG-2 or DV methods. In addition, the interface 102 comprises the audio-visual data flow processing capabilities in accordance with IEEE-1394 and IEC-61883, sections 1 to 5 ("Standard for a Consumer-Use Digital Interface").

The unit 93 is a microprocessor able to execute the software architecture stored in the ROM 94. This microprocessor may for example be an MPC860 controller from Motorola.

On the one hand, the unit 93 transmits or receives digital data by means of the bus 96. On the other hand, the unit 93 comprises input/output ports, of the Serial Communication Controller (SCC) type, which can be connected to the units 115 and 116.

The unit 115 is a receiver able to receive operating commands intended for a certain host in the audio-visual system. The unit 115 may for example be able to receive, from a suitable remote control (see Figure 1), signals in the form of infrared radiation. The signals leaving the receiver 115 and entering the unit 93 by means of the SCC ports are put by this unit 93 in a form enabling them to be transmitted over the links in the sub-network (in the embodiment envisaged, in the form of packets to IEEE-1355).

This unit 115 can also where necessary function as a transmitter, for example for a graphical interface serving to control the commands sent by the remote controls (see the second embodiment described with reference to Figure 4).

The unit 116 is a command signal transmitter intended to cause a host associated with this device 90 to operate. This host will be controlled either by means of a connecting cable connecting it to the unit 116, or by means of non-cable signals sent by the unit 116, for example in the form of infrared radiation. The transmitter 116 is supplied by the unit 93 from signals representing these commands which have been received by the unit 93 after having been transmitted in an appropriate form (in the embodiment envisaged, in the form of packets to IEEE-1355), over links in the sub-network.

It should be noted that, for the conventional data processing apparatus exchanging analogue signals, a unit such as 116 constitutes the only means for controlling the operation, whilst an apparatus to IEEE-1394 can always be at least controlled by means of an interface 103 and the bus to which it is connected.

The microprocessor 93, the ROM 94 and the RAM 95 communicate by means of respective address and data buses denoted 96, 97 and 98, themselves connected to a main bus 100. The bus 100 can also connect together other elements, not depicted in the figure, themselves provided with a bus interface and being able to implement, for example, data processing functions.

The bus 100 functions in particular as an "external bus" for the microprocessor 93. The specifications of this functioning can be found in the corresponding user guide ("MPC860 Power QUICC User's Manual", chapter 11). The interface component 101 allows exchanges of data between different modules connected to the bus 100 in accordance with the specifications which have just been mentioned.

As depicted in Figure 2, the node according to the invention also has two interfacing means 103 and 104.

The means 103 complies with "IEEE Std 1394a-2000, Standard for a High Performance Serial Bus (Supplement)". It has at least one external port intended to be connected to a 1394 serial communication bus.

The interfacing means 103 is for example a set of 1394 PHY/LINK components consisting of a PHY TSB21LV03A component and a LINK TSB12LV01A component sold by the company Texas Instruments and 1394 connectors such as those sold by Molex, for example under the reference 53462.

The interfacing means 103 contains memories of the FIFO type (the initials of "First-in First-out", that is to say memories in which the data are read in the order in which they were previously written), which are used during the transfer of data packets of the type in accordance with IEEE 1394. It comprises two FIFO transmission memories known as "ATF" (the initials of the words "Asynchronous Transfer FIFO"), and "ITF" (the initials of the words "Isochronous Transfer FIFO") and a FIFO reception memory known as "GRF" (the initials of "General Receive FIFO"). These FIFO memories are more broadly described in the documentation associated with the LINK TSB12LV01A component.

The means 103 has means of counting the number of pulses according to the clock signal generated by a control module 107, which will be described subsequently. This clock signal is synchronised with the serial communication bus with which it is in relationship, by means of cycle start packets. The frequency of the clock signal generated by the control module 107 is 24.576 MHz +/- 100 ppm. This signal is represented by ctrl3 in Figure 2.

The interfacing means 104 mentioned above is an interface component 1355 connected to the switching part (not shown) of the node of the audio-visual system of which this device 90 forms part, thus enabling the device 90 to communicate with the remainder of the system.

The device 90 also has a means of controlling the data flow 105 which allows the transfer of data between the different interface components 101, 103 and 104. This means 105 is produced in programmable logic, implemented by a component of the "FPGA" type (the initials of "Field Programmable Gate Array"), for example with the reference Virtex, sold by the company XILINX.

This means 105 uses notably a double-port storage unit 106 which makes it possible to store data intended for or coming from the 1355 switched network.

The storage unit 106 can for example be produced in the form of a memory of the "DPRAM" type (the initials of "Dual Port Random Access Memory") with 32 bit access. It has a plurality of memory areas which are managed as individual areas of the "FIFO" type. These memory areas each have associated reading and writing pointers.

Since each memory area is managed like a memory of the FIFO type, its filling and emptying can be carried out at the same time, and independently. This makes it possible to desynchronise the data reading and writing operations carried out by a unit 108 for switching the data reading and writing operations carried out by a control unit 107 (these two units are described below).

This is because the level of occupation of the memory area in question is managed in a circular manner and it is known at all times whether or not the data contained in a memory area have been read. When these data have been read it is then possible to write new data in their place.

The double port storage unit constitutes in some way a queue for the packets and the storage function is performed independently according to the port by which the packets reach the storage unit.

In general terms, all the isochronous or asynchronous data coming from the switched network are stored in the storage unit 106.

This storage is temporary for the asynchronous data packets, (packets constituting a message transmitted in non-connected mode and for the connection protocol packets).

On the other hand, the packets of isochronous data (packets of the "stream" type, that is to say those transmitted in connected mode), are stored solely in this storage unit 106 before they are transmitted over the communication bus to which the device 90 is connected or to other nodes in the audio-visual system.

This is explained by the fact that the data of this type must be transferred as quickly as possible before being transmitted over the bus and must therefore be stored in memory in a storage means which is easily and rapidly accessible.

Likewise, the packets of isochronous data issuing from the communication bus to which the device 90 is connected and which are intended for other nodes are stored solely in the storage unit 106 and not in the RAM 95, for the same reasons as those mentioned above.

As depicted in Figure 2, the data flow control means 105 has several other elements, including a control unit 107 (already mentioned above) which fulfils a function of controlling the storage unit 106, a switching unit 108 (already mentioned above) in communication with the interfacing means 104, with the storage unit 106 and with the control unit 107, and a unit for sequencing the data packets 109 which is in relationship with the control unit 107.

The function of the control unit 107 is to multiplex the accesses in read or write mode to registers of other modules from the main bus denoted 100. It should also be noted that the control unit 107 communicates with the interfacing means 103 and 104 and with the bus interface component denoted 101.

The unit 107 also has control of the bus interface component 101 for the read and write operations on the main bus 100, including notably the transfer in "burst mode". To do this, the unit 107 exchanges data with the component 101 on an add-on bus 110 in accordance with the control signals denoted ctrl 1. The control unit 107 is also responsible for triggering interrupts on the main bus 100 according to particular communication events.

The unit 107 is responsible for controlling the storage unit 106 with regard to the read and write operations in FIFO mode by means of a data bus 111 and control signal bus ctrl 2.

The control unit 107 and the interface means 103 manage the data transfer on a bus 112 conveying the control signals ctrl 3.

Moreover, the control unit 107 controls the switching unit 108 by means of control signals ctrl 4 in order to transfer data from the switching unit to the storage unit 106 by means of a data bus 113 and vice versa.

The switching unit 108 is connected to interface means 104 by means of a data bus 114 conveying control signals ctrl 5.

The data packet sequencing unit 109 denoted SAR (initials of "Segmentation And Reassembling") informs the control unit 107 of the next data packet or packets to be transmitted by means of control signals ctrl 6.

In addition, the sequencing unit 109 checks the reception of the data packets and manages the allocation and release of the memory areas in the storage unit 106.

The control signals ctrl7 exchanged between the interfacing means 104 and the control unit 107 comprise notably the clock signals regenerated from the reception of packets according to IEEE-1355 received by the interfacing means 104.

A 49.152 MHz crystal (not shown) is connected both to the means 104 for transmitting IEEE-1355 packets and to the control unit 107 which manages a clock signal at 24.576 MHz +/- 100 ppm, to the benefit on the one hand of the unit 109 sequencing the IEEE-1355 packets and on the other hand the interfacing means 103, in order to time the transmission of the IEEE-1394 packets.

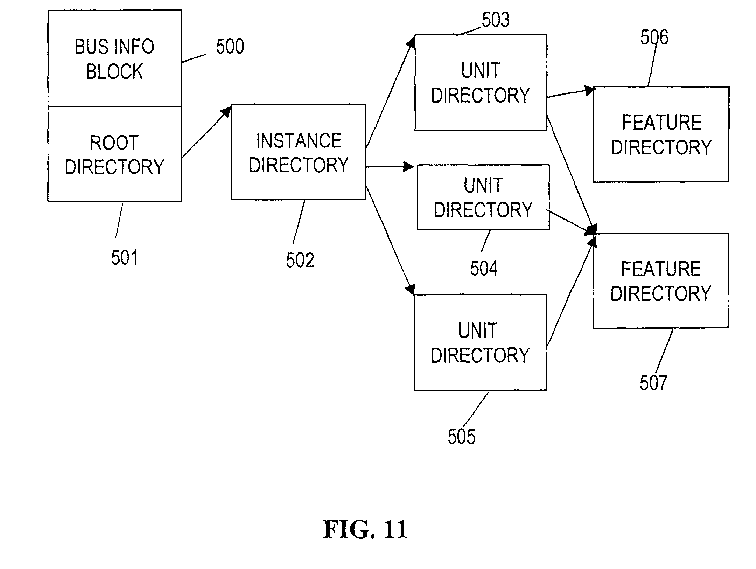

**Figure 3** shows the main successive steps 200 to 205 used for the loading, in the RAM 95 of the connection device 90, of the configurations of the analogue-control hosts to which this device is connected. This loading is controlled by the microprocessor 93 on the basis of an algorithm stored in the ROM 94. The configuration areas set up in the RAM 95 at step 202 are described in detail with reference to Figure 11.

According to the invention, in its second aspect, the configuration of the analogue apparatus 92 is derived from the features of the interface 102, which is capable, on the one hand, of processing the data coming from this apparatus 92, and conversely, on the other hand, to transmit to it data which it is capable of processing.

The analogue devices connected to the interfaces such as the interface 102 will thus have allocated to them the functionalities of these interfaces. For example, by means of such an interface, a conventional television receiver of the analogue type will be in a position to display an image issuing from a digital signal to the standard MPEG2; the overall functionality of this interface/analogue television receiver assembly will therefore finally be similar to that of a data processing device (display) in accordance with MPEG2.

**Figure 4** is a flow diagram depicting the main successive steps of the algorithm used for connecting the source host and the destination host chosen by the user, according to a first embodiment of the invention. This algorithm is executed, in the connection device 90 connected to the destination host, by the microprocessor 93 on the basis of instructions supplied by the ROM 94.

At step 400, the "local" connection device receives, by means of the reception unit 115, the instruction to seek a destination host amongst the hosts connected to this connection device, this instruction having been sent by the remote control associated with this destination host. The destination host being situated close to the user of the remote control, this user will be in a position to control the running of the operations described in this algorithm.

At step 403, the "local" connection device 90, that is to say one situated close to the user, receives the instruction to seek, in the "distant" connection devices, the host having the appropriate configuration for being able to communicate with the destination chosen by the user in steps 401 and 402. This instruction is sent by the remote control associated with the required source host, and therefore contains the data format information serving to identify this configuration. This search instruction is sent by the user by actuating a special button on the remote control, mentioned in Figure 1 under the name "search function"; as a variant, provision can be made for another button on the remote control, for example the button for starting up the associated apparatus, to trigger the "search function" when it is actuated at this step in the algorithm. When, at step 412, this source host has been identified, a management connection is established at step 414 in order to be able, at step 418, to forward the subsequent commands to the source host (for example, if the source host is a video tape recorder, the command to rewind a video cassette placed therein) sent by the remote control.

Steps 400 to 409 correspond to the search for the source host according to the features entered in its configuration.

At step 410, a source host having features compatible with the destination host is connected to the destination host. Where it is not the source host required by the user (for example, a video tape recorder other than the one containing the video cassette which the user wishes to display), the search is continued at step 413.

According to a second embodiment of the invention, the remote control operations are displayed on a display unit independent of the destination host. It is then possible to select this destination host in the same way as the source host is selected by means of steps 403 to 412. This embodiment has the advantage that it is possible, by virtue of it, to put in communication two hosts which are both remote from the user.

Naturally, whatever the embodiment used, it is possible to put in communication a source host and a destination host connected to the same connection device 90.

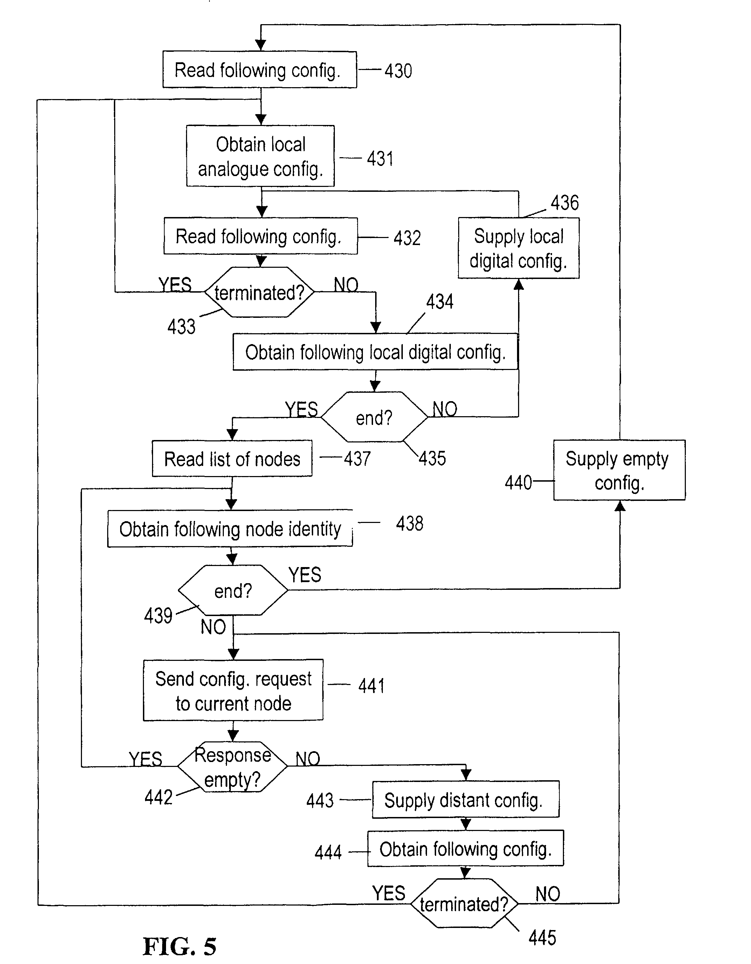

**Figure 5** is a flow diagram depicting in detail certain steps included in step 404 in Figure 4, the function of these steps being to collect the configurations of all the hosts in the audio-visual system.

Steps 431 to 436 correspond to the obtaining of the configurations of all the "local" hosts. More precisely, steps 430 to 433 consist of obtaining the functionalities associated with the apparatus processing analogue signals; steps 432 to 436 consist of obtaining the functionalities associated with the apparatus connected to a bus according to IEEE-1394, in accordance with the protocols defined by this standard.

Steps 437 to 445 correspond to the obtaining of the configurations of all the hosts connected to "distant" nodes, each of them responding to the request sent at step 441 by supplying, until the list of hosts connected to it is exhausted (step 442), the configuration of each of them.

The obtaining of this information (step 443) serves to complete an execution of step 404 in Figure 4.

At step 444, a new configuration request corresponding to a new execution of step 404 is awaited.

The algorithm of Figure 5 can, according to various embodiments of the invention, be executed at different times. For example, it can be executed each time a new data processing apparatus is connected to a bus according to IEEE-1394.

It should be noted that, when a new apparatus is connected to a bus according to IEEE-1394, an update signal ("bus reset") is sent; following the reception of this signal, the connection device 90 reads, at least partly, the memory area of each of the apparatus connected to the bus, as well as their functionalities and features. The connection device next stores these data in its random access memory 95.

In a variant, the algorithm of Figure 5 can be executed when a connection device 90 receives a request for inventorying the hosts which are connected to it. It then collects the functionalities of all the apparatus connected to the digital ports, and the functionalities of the analogue ports to which analogue apparatus are connected. The connection device 90 then supplies all of this local information without it necessarily being stored in the RAM 95.

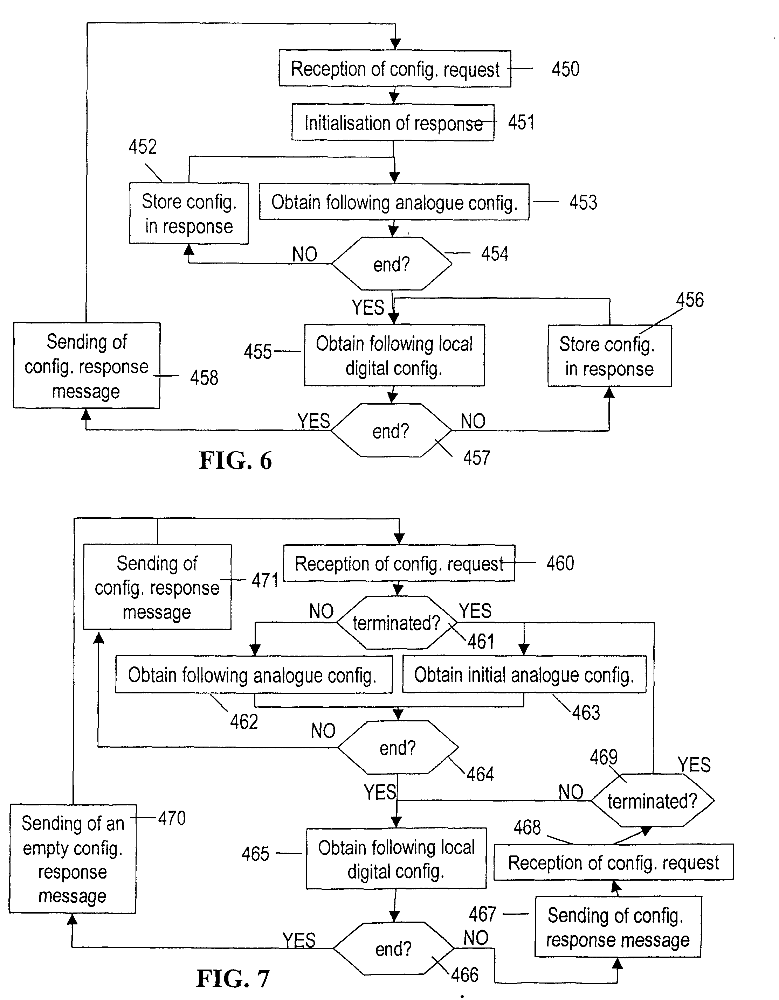

**Figure 6** is a flow diagram representing in detail certain steps included in step 443 of Figure 5, the function of these steps being to transmit, according to a first embodiment, in a grouped fashion, the configurations of all the hosts connected to a connection device, to another connection device which has requested this.

**Figure 7** is a flow diagram depicting in detail certain steps included in step 443 of Figure 5, the function of these steps being to transmit, according to a second embodiment, one after the other, the configurations of all the hosts connected to a connection device, to another connection device which has requested this.

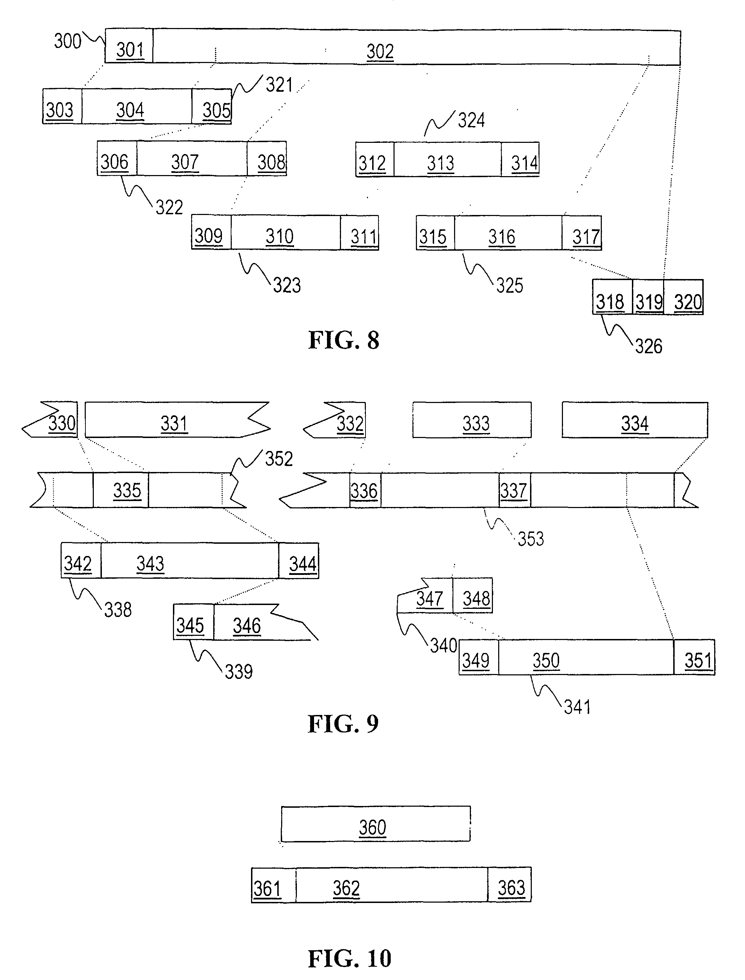

**Figure 8** describes the format of the so-called "management" data packets, which are of two different types.

The first type of management data represents information on the configuration of one or more of the hosts of the audio-visual system. When the packet is sent by the future destination of the audio-visual data, it is a case of a quest for information from other nodes; when the packet is sent by one of these other nodes, it is a case of the information on the configuration of the hosts connected to this sending node, intended for said future destination of the audio-visual data.

The second type of management data represents commands for making a particular host connected to the device receiving said packet function. In this case, the packet (which, it will be recalled, complies with the IEEE-1355 standards) may for example have been sent by an interface (see unit 93 in Figure 2) which has received an analogue signal coming from the associated infrared receiver 115, or by an interface (see unit 103 in Figure 2) which has received a digital command according to IEEE-1394 from a host connected to this interface 103.

The message 300 is composed of a packet header field 301, which makes it possible precisely to distinguish between said first and said second type of data, and a user data field 302 ("Message Payload").

In order to be sent over the switched network the message 300 is decomposed into a series of packets 321 to 326 under the control of the sequencing unit 109 of Figure 2.

The packet header fields 303, 306, 309, 312, 315 and 318 contain routing information representing the path to be followed, the identifier of the node which sent the packet, the transfer mode (here the "management" mode), and the number of the sending FIFO memory in the double port storage unit 106. Conventionally the values of these fields are identical.

The user data fields of the packet 304, 307, 310, 313, 316 and 319 contain all the data which constitute the message 300, the packets being sent so that the entire message 300 is sent in order from left to right.

The end of packet fields 305, 308, 311, 314, 317 and 320 are explicitly added by the interfacing means 104 after the sending of each packet. These fields all represent an end of packet marker ("EOP"), as described in IEEE-1355-95. The fields 305, 308, 311, 314 and 317 all have the same value EOP1, whilst only the field 320 which belongs to the last packet in the message has the value EOP2. It should be noted that the size of the field 319 depends notably on the number of data remaining to be sent in the message 300.

**Figure 9** describes the format of the packets transferred in stream mode representing audio-visual data going from the source host to the destination host.

The stream of data partially represented by the fields 352 and 353 consists on the one hand of a set of user data fields ("Stream Payload") represented by the fields 330 to 334, and on the other hand a set of packet header fields represented by the fields 335 to 337.

The fields 330 to 334 represent data to be transmitted and each consist for example of a 1394 packet of the isochronous type. In this case, all the fields 330 to 334 have the characteristic of belonging to the same isochronous data stream and therefore contain the same channel number value.

In order to be sent over the switched network, the data stream partially represented by the sets of fields 352 and 353 is decomposed into a series of packets 338 to 341 under the control of the sequencing unit 109.

The packet header fields referenced 342, 345 and 349 contain routing information representing the path to be travelled, the identifier of the node which has sent the packet, the transfer mode (here stream mode), and the number of the FIFO transmission memory in the double port storage unit 106. Conventionally the value of these fields is identical.

The user data fields of the packet referenced 343, 346, 347 and 350 contain some of the data which make up the stream, the packets being sent so that the entire stream is sent in order from left to right.

The end of packet fields referenced 344, 348 and 351 are explicitly added by the interfacing means 104 after the sending of each packet. These field all represent an end of packet marker, and all have the same value EOP1.

**Figure 10** describes the format of the data packets used in the connection protocol between the switching nodes of the audio-visual system.

These packets are sent over the switched network under the control of the sequencer unit 109 in the form of a single packet.

The packet header field referenced 361 contains routing information representing the path to be travelled, the identifier of the node which sent the packet, the transfer mode (here protocol mode) and the number of the FIFO transmission memory in the storage unit 106.

The field 360 constitutes the whole of a protocol message, such as for example a connection request message. The user data field of the packet 362 is exactly equivalent to the field 360.

The end of packet field 363 is explicitly added by the interfacing means 104 after the sending of the packet. This field invariably has the value EOP1.

**Figure 11** depicts an example of a mode of arranging, in a device according to the invention, memory areas intended for the configuration data of all the hosts to which it is connected.

This arrangement mode is in accordance with the standard "ISO/IEC 13213: 1994 (ANSI/IEEE Std 1212), Information technology - Microprocessor systems - Control and Status Registers (CSR) Architecture for microcomputer buses".

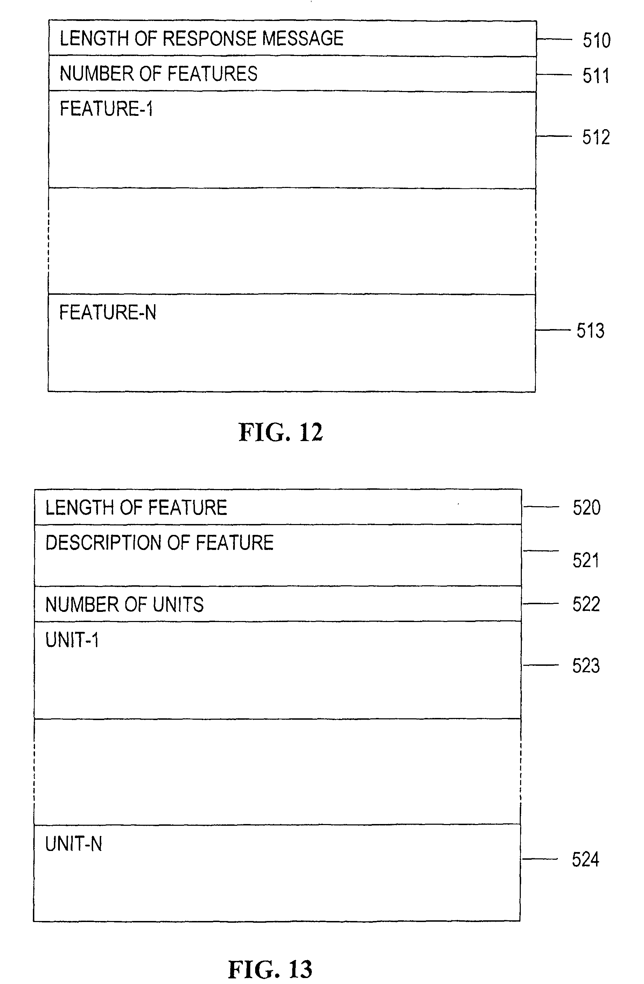

**Figure 12** depicts an example of a method of classifying configuration data in a packet according to Figure 8.

This packet is sent either at step 458 of Figure 6, or at steps 467, 470 and 471 of Figure 7.

In the absence of such data in the packet, the field 510 contains a zero value. The field 511 indicates the number of main features, described in the fields 512 to 513.

**Figure 13** depicts an example of the organisation of data forming a subset of the data in Figure 12, this subset corresponding to a particular configuration feature presented by one or more of the hosts connected to the device sending said packet, for example the one appearing in the field 512.

The field 520 then indicates the total length of the field 512, except for the field 520 itself. An "empty" field contains solely a field 520 containing a zero value.

The field 521 describes information concerning the format of the data. The field 522 indicates the number of hosts having this particular feature, and the fields 523 to 524 give information concerning each of these hosts.

The present invention is not limited to the embodiments described above: in fact, an expert will be able to implement various variants of the invention whilst remaining within the scope of the accompanying claims.

For example, the hosts in the network according to the invention can be apparatus able to send or receive data of a nature other than audio-visual data.

## Claims

1. Method of managing a communication network comprising
a) a sub-network, which consists of communication nodes interconnected by links conveying digital signals, and
b) several hosts able to exchange data by means of this sub-network said method being **characterised in that**, in order to actuate, from any first node in the network, any host in the network by means of operating commands transmitted by an appropriate interface (103, 116) attached to a second node in the network to which said host is connected,
- a search signal containing information representing the technical features of the host to be actuated is transmitted from said first node in the direction of the nodes in the network including the first node,
- a candidate host is identified by a node, which candidate host may be the host to be actuated on the basis of compatibility between the technical features of this candidate host and the technical features indicated in the search signal,
- this host candidate is started up by means of a control interface (103, 116) attached to the node to which said candidate host is connected, and
- if this candidate host proves not to be the host to be actuated, a search signal is transmitted once again in order to continue the search, whereas, if this host does indeed prove to be the host to be actuated, operating commands are sent to it by means of said control interface (103, 116), which also interrupts the search.

2. Method of managing a communication network according to Claim 1, **characterized in that** said network comprises at least one host able to exchange analogue signals by means of a data interface (102) and being able to be controlled by means of a control interface (116), and **in that** certain technical features useful for being able to control this at least one host are obtained by analyzing the technical features of said data interface (102).

3. Method of managing a communication network, **characterized in that**, in order to put two hosts in the network in communication, a method according to Claim 1 or Claim 2 is implemented for at least one of said two hosts.

4. Method of managing a communication network according to Claim 3, **characterized in that** said two hosts are connected to the same node in said sub-network.

5. Communication node intended to form part of a communication network comprising a sub-network consisting of communication nodes interconnected by links conveying digital signals, and several hosts able to exchange data by means of this sub-network, said node being **characterized in that** it comprises
- means for comparing the technical features indicated in a received search signal with the technical features of a host to which said node is connected, and
- a control interface (103, 116) able to start up and operate said host.

6. Communication node according to Claim 5, **characterized in that** it further comprises
- at least one data interface (102) for the possible connection of a host able to exchange analogue signals and able to be receive operating commands from said control interface (116), and
- a unit (93) supplying said control interface (116) with received signals which represent these operating commands.

7. Communication node intended to form part of a communication network comprising a sub-network consisting of communication nodes interconnected by links conveying digital signals, and several hosts able to exchange data by means of this sub-network, said node being **characterized in that** it comprises
- means for transmitting to all nodes in the network a search signal containing information representing the technical features of a host to be actuated, and
- means for sending operating commands to said host to be actuated.

8. Communication node according to Claim 7, **characterized in that** it further comprises
- at least one receiver (115) able to receive operating commands intended for said host to be actuated, and
- a unit (93) supplied by said receiver (115) and able to produce signals representing these operating commands.

9. Data processing apparatus, **characterized in that** it has a communication node according to any one of Claims 5 to 8.

10. Communication network, **characterized in that** it comprises at least one communication node according to any one of Claims 5 to 8.

11. Communication network according to Claim 10, **characterized in that** said data represent audio-visual information.

12. Data storage means which can be read by a computer or a microprocessor storing instruction of a computer program, **characterized in that** it is arranged to implement a method according to any one of Claims 1 to 4.

13. Data storage means which is removable, partially or totally, and which can be read by a computer and/or a microprocessor storing instructions of a computer program, **characterized in that** it is arranged to implement a method according to any one of Claims 1 to 4.

14. Computer program, containing instructions such that, when said program controls a programmable data processing device, said instructions mean that said data processing device implements a method according to any one of Claims 1 to 4.

## Patentansprüche

1. Verfahren zum Verwalten eines Kommunikationsnetzes mit
a) einem Unternetz, das aus Kommunikationsknoten besteht, die untereinander durch digitale Signale tragende Verbindungen verbundenen sind, und
b) mehreren zum Austauschen von Daten mittels dieses Unternetzes fähigen Hosts,
**dadurch gekennzeichnet, dass** zum Ansteuern irgendeines Hosts in dem Netz von irgendeinem ersten Knoten in dem Netz aus mittels Betriebsbefehle, die durch eine geeignete, einem zweiten Knoten in dem zugeordnete Schnittstelle (103, 116) übertragen werden, mit dem Host verbundenen Netz,
- ein Suchsignal, das die technischen Merkmale des anzusteuernden Hosts darstellende Informationen enthält, von dem ersten Knoten in die Richtung der Knoten in dem Netz inklusive des ersten Knotens übertragen wird,
- ein Hostkandidat durch einen Knoten bezeichnet wird, wobei der Hostkandidat der auf der Grundlage einer Übereinstimmung zwischen den technischen Merkmalen dieses Hostkandidaten und den durch das Suchsignal angezeigten technischen Merkmalen anzusteuernde Host sein kann,
- dieser Hostkandidat mittels einer Steuerschnittstelle (103, 116) in Betrieb genommen wird, die dem Knoten zugeordnet ist, mit dem Hostkandidat verbunden ist, und
- ein Suchsignal erneut zum Fortsetzen der Suche übertragen wird, wenn sich dieser Hostkandidat nicht als der anzusteuernde Host erweist, wohingegen, wenn dieser Host sich tatsächlich als der anzusteuernde Host erweist, Betriebsbefehle mittels der Steuerschnittstelle (103, 116), die auch die Suche unterbricht, zu ihm gesendet werden.

2. Verfahren zum Verwalten eines Kommunikationsnetzes nach Patentanspruch 1, **dadurch gekennzeichnet, dass** das Netz zumindest einen Host umfasst, der analoge Signale mittels einer Datenschnittstelle (102) austauschen kann und mittels einer Steuerschnittstelle (116) gesteuert werden kann, und dass bestimmte für die Steuerfähigkeit dieses zumindest einen Hosts nützliche technische Merkmale durch Analysieren der technischen Merkmale der Datenschnittstelle (102) erhalten werden.

3. Verfahren zum Verwalten eines Kommunikationsnetzes,
**dadurch gekennzeichnet, dass** zum Verbinden zweier Hosts in dem Netz ein Verfahren nach Patentanspruch l oder Patentanspruch 2 für zumindest einen der zwei Hosts implementiert ist.

4. Verfahren zum Verwalten eines Kommunikationsnetzes nach Patentanspruch 3, **dadurch gekennzeichnet, dass** die zwei Hosts mit demselben Knoten in dem Unternetz verbunden sind.

5. Kommunikationsknoten, der zum Bilden eines Teils eines Kommunikationsnetzes mit einem Unternetz, das aus Kommunikationsknoten besteht, die untereinander durch digitale Signale tragende Verbindungen verbundenen sind, und mehreren zum Austauschen von Daten über dieses Unternetz fähigen Hosts bestimmt ist, wobei der Knoten
**dadurch gekennzeichnet ist, dass** er
- eine Einrichtung zum Vergleichen der in einem empfangenen Suchsignal angezeigten technischen Merkmale mit den technischen Merkmalen eines Hosts, mit dem der Knoten verbunden ist, und
- eine Steuerschnittstelle (103, 116) umfasst, die den Host in Betrieb nehmen und betreiben kann.

6. Kommunikationsknoten nach Patentanspruch 5, **dadurch gekennzeichnet, dass** er ferner
- zumindest eine Datenschnittstelle (102) für die mögliche Verbindung eines zum Austauschen analoger Signale und zum Empfangen von Betriebsbefehlen von der Steuerschnittstelle (116) fähigen Hosts, und
- eine der Steuerschnittstelle (116) empfangene, diese Betriebsbefehle darstellende Signale zuführende Einheit (93) umfasst.

7. Kommunikationsknoten, der zum Bilden eines Teils eines Kommunikationsnetzes mit einem Unternetz, das aus Kommunikationsknoten besteht, die untereinander durch digitale Signale tragende Verbindungen verbundenen sind, und mehreren zum Austauschen von Daten über dieses Unternetz fähigen Hosts bestimmt ist, wobei der Knoten **dadurch gekennzeichnet ist, dass** er
- eine Einrichtung zum Übertragen eines Suchsignals, das die technischen Merkmale des anzusteuernden Hosts darstellende Informationen enthält, zu allen Knoten in dem Netz, und
- eine Einrichtung zum Senden von Betriebsbefehlen zu dem anzusteuernden Host umfasst.

8. Kommunikationsknoten nach Patentanspruch 7, **dadurch gekennzeichnet, dass** er ferner
- zumindest eine zum Empfangen von für den anzusteuernden Host bestimmten Betriebsbefehlen fähige Empfangseinrichtung (115), und
- eine durch die Empfangseinrichtung (115) versorgte und zum Erzeugen von diese Betriebsbefehle darstellenden Signalen fähige Einheit (93) umfasst.

9. Datenverarbeitungsvorrichtung, **dadurch gekennzeichnet, dass** sie einen Kommunikationsknoten nach einem der Patentansprüche 5 bis 8 aufweist.

10. Kommunikationsnetz, **dadurch gekennzeichnet, dass** es zumindest einen Kommunikationsknoten nach einem der Patentansprüche 5 bis 8 besitzt.

11. Kommunikationsnetz nach Patentanspruch 10, **dadurch gekennzeichnet, dass** die Daten audiovisuelle Informationen darstellen.

12. Datenspeichereinrichtung, die durch einen Computer oder einen Anweisungen eines Computerprogramms speichernden Mikroprozessor gelesen werden kann, **dadurch gekennzeichnet, dass** sie zum Implementieren eines Verfahrens nach einem der Patentansprüche l bis 4 eingerichtet ist.

13. Datenspeichereinrichtung, die ganz oder teilweise entfernbar ist, und die durch einen Computer und/oder einen Anweisungen eines Computerprogramms speichernden Mikroprozessor gelesen werden kann, **dadurch gekennzeichnet, dass** sie zum Implementieren eines Verfahrens nach einem der Patentansprüche 1 bis 4 eingerichtet ist.

14. Computerprogramm, das Anweisungen enthält, so dass wenn das Programm eine programmierbare Datenverarbeitungsvorrichtung steuert, die Anweisungen bedeuten, dass die Datenverarbeitungsvorrichtung ein Verfahren nach einem der Patentansprüche 1 bis 4 implementiert.

## Revendications

1. Procédé de gestion d'un réseau de communication, comprenant :
a) un sous-réseau qui est constitué de noeuds de communication interconnectés par des liaisons acheminant des signaux numériques, et
b) plusieurs hôtes capables d'échanger des données au moyen de ce sous-réseau, ledit procédé étant **caractérisé en ce que**, afin d'activer depuis un premier noeud quelconque du réseau, un hôte quelconque du réseau au moyen de commandes d'exploitation transmises par une interface appropriée (103, 116) reliée à un second noeud du réseau auquel ledit hôte est connecté,
- un signal de recherche contenant des informations représentant les caractéristiques techniques de l'hôte devant être activé est transmis depuis ledit noeud dans la direction des noeuds du réseau, y compris le premier noeud,
- un hôte candidat est identifié par un noeud, lequel hôte candidat pouvant être l'hôte devant être activé sur la base de la comptabilité entre les caractéristiques techniques de cet hôte candidat et des caractéristiques techniques indiquées dans le signal de recherche,
- ce candidat hôte est mis en fonctionnement au moyen d'une interface de commande (103, 116) reliée au noeud auquel est connecté ledit hôte candidat, et
- si cet hôte candidat se révèle ne pas être l'hôte devant être activé, un signal de recherche est transmis une fois encore afin de poursuivre la recherche, tandis que si cet hôte se révèle bien être l'hôte devant être activé, des commandes d'exploitation lui sont envoyées au moyen de ladite interface de commande (103, 116), ce qui interrompt également la recherche.

2. Procédé de gestion d'un réseau de communication selon la revendication 1, **caractérisé en ce que** ledit réseau comprend au moins un hôte capable d'échanger des signaux analogiques au moyen d'une interface de données (102) et qui est capable d'être commandé au moyen d'une interface de commande (116), et **en ce que** certaines caractéristiques techniques utiles pour pouvoir commander cet au moins un hôte sont obtenues en analysant les caractéristiques techniques de ladite interface de données (102).

3. Procédé de gestion d'un réseau de communication, **caractérisé en ce que**, pour mettre deux hôtes du réseau en communication, un procédé selon la revendication 1 ou la revendication 2 est mis en oeuvre pour au moins l'un desdits deux hôtes.

4. Procédé de gestion d'un réseau de communication selon la revendication 3, **caractérisé en ce que** lesdits deux hôtes sont connectés au même noeud dudit sous-réseau.

5. Noeud de communication destiné à faire partie d'un réseau de communication comprenant un sous-réseau constitué de noeuds de communication interconnectés par des liaisons acheminant des signaux numériques, et plusieurs hôtes capables d'échanger des données au moyen de ce sous-réseau, ledit noeud étant **caractérisé en ce qu'**il comprend :
- un moyen pour comparer les caractéristiques techniques indiquées dans un signal de recherche reçu aux caractéristiques techniques d'un hôte auquel ledit noeud est connecté, et
- une interface de commande (103, 116) capable de démarrer et de faire fonctionner ledit hôte.

6. Noeud de communication selon la revendication 5, **caractérisé en ce qu'**il comprend en outre :
- au moins une interface de données (102) pour la connexion possible d'un hôte capable d'échanger des signaux analogiques et capable de recevoir des commandes d'exploitation de ladite interface de commande (116), et
- une unité (93) fournissant à ladite interface de commande (116) des signaux reçus qui représentent ces commandes d'exploitation.

7. Noeud de communication destiné à faire partie d'un réseau de communication comprenant un sous-réseau constitué de noeuds de communication interconnectés par des liaisons acheminant des signaux numériques, et plusieurs hôtes capables d'échanger des données au moyen de ce sous-réseau, ledit noeud étant **caractérisé en ce qu'**il comprend :
- un moyen pour transmettre à tous les noeuds du réseau un signal de recherche contenant des informations représentant les caractéristiques techniques d'un hôte devant être activé, et
- un moyen pour envoyer des commandes d'exploitation audit hôte devant être activé.

8. Noeud de communication selon la revendication 7, **caractérisé en ce qu'**il comprend en outre :
- au moins un récepteur (115) capable de recevoir des commandes d'exploitation destinées audit hôte devant être activé, et
- une unité (93) fournie par ledit récepteur (115) et capable de produire des signaux représentant ces commandes d'exploitation.

9. Appareil de traitement de données, **caractérisé en ce qu'**il comporte un noeud de communication selon l'une quelconque des revendications 5 à 8.

10. Réseau de communication, **caractérisé en ce qu'**il comprend au moins un noeud de communication selon l'une quelconque des revendications 5 à 8.

11. Réseau de communication selon la revendication 10, **caractérisé en ce que** lesdites données représentent des informations audiovisuelles.

12. Moyen de stockage pouvant être lu par un ordinateur ou un microprocesseur stockant des instructions d'un programme informatique, **caractérisé en ce qu'**il est conçu pour mettre en oeuvre un procédé selon l'une quelconque des revendications 1 à 4.

13. Moyen de stockage de données qui est amovible, partiellement ou en totalité, et qui peut être lu par un ordinateur et/ou par un microprocesseur stockant des instructions d'un programme informatique, **caractérisé en ce qu'**il est conçu pour mettre en oeuvre un procédé selon l'une quelconque des revendications 1 à 4.

14. Programme informatique contenant des instructions telles que lorsque ledit programme commande un dispositif de traitement de données programmable, lesdites instructions signifient que ledit dispositif de traitement de données met en oeuvre un procédé selon l'une quelconque des revendications 1 à 4.
